# EUROPÄISCHE PATENTANMELDUNG

(11) **EP 0 681 156 A1**
(43) Veröffentlichungstag der Anmeldung: **08.11.1995**
(21) Anmeldenummer: 95104455.1
(22) Anmeldetag: 27.03.1995
(51) Int. Cl.: F28F 13/00, H01M 8/04

(54) **Wärmeaustauscher**

(30) Priorität: 07.05.1994 DE 4416236
(71) Anmelder: Schmidt-Bretten GmbH, D-75015 Bretten (DE)
(72) Erfinder: Guo, Zhan-Geng, Dr.-Ing., D-70437 Stuttgart (DE); Niemann, Johann, Dipl.-Ing., D-67105 Schifferstadt (DE)
(74) Vertreter: Lemcke, Rupert, Dipl.-Ing.

(57) **Zusammenfassung**

Es wird ein Wärmeaustauscher mit einer ersten Wärmeaustauschkammer (12) zum Kühlen oder Erwärmen von Gegenständen bzw. eines gasförmigen oder flüssigen Mediums angegeben, welche Gegenstände bzw. Medien mit der Arbeitswand (3) der ersten Wärmeaustauschkammer (12) in Verbindung stehen, die zwischen einem Einlaß (10) und einem Auslaß (11) von einem Kühlmittel bzw. Heizmittel durchströmt ist. Dabei ist vorgesehen, daß der Kammer (12) senkrecht zur Arbeitswand (3) wenigstens eine weitere Wärmeaustauschkammer (13) vorgeschaltet ist, daß die weitere Kammer (13) die der Arbeitswand (3) der ersten Kammer (12) gegenüberliegende Wand (14) mit der ersten Kammer (12) gemeinsam hat, daß die weitere Kammer (13) den Einlaß (10) für das Kühl- bzw. Heizmittel aufweist, und daß das Kühl- bzw. Heizmittel von der weiteren Kammer (13) in die erste Kammer (12) zumindest indirekt übergeleitet wird.

## Beschreibung

Die Erfindung betrifft einen Wärmeaustauscher mit einer ersten Wärmeaustauschkammer zum Kühlen oder Erwärmen von Gegenständen bzw. eines gasförmigen oder flüssigen Mediums, wobei eine Arbeitswand der ersten Wärmeaustauschkammer mit ihrer Arbeitsfläche mit den Gegenständen bzw. dem Medium in Verbindung steht, und wobei die Kammer zwischen einem Einlaß und einem Auslaß von einem Kühlmittel bzw. Heizmittel durchströmt ist, das die Arbeitswand auf der der Arbeitsfläche abgewandten Seite bestreicht.

Derartige Wärmeaustauscher finden in der chemischen Industrie, Biotechnologie und Medizintechnik als Heiz- oder Kühlkörper in Reaktoren, als Reaktorwände, bei Heiz- und Kühlbädern, als Heizsystem von chemischen Prozessen und als Wände von Prozeßschränken Verwendung. Ferner in der Lebensmittelindustrie zum Heizen oder Kühlen temperaturempfindlicher Produkte. Weiterhin als Wände von Klimagehäusen sowie für die Fußboden-, Decken-und Wandheizung. Schließlich ist ein besonderes Gebiet, auf das nachfolgend ohne Einschränkung im wesentlichen Bezug genommen wird, die Kühlung von wiederaufladbaren Batterien von Elektrofahrzeugen insbesondere Elektroautomobilen. Diese wiederaufladbaren Batterien sind dicht auf der Arbeitsfläche des Wärmeaustauschers montiert. Die bei der Entladung der Batterien freiwerdende Wärme wird durch das unter der Arbeitswand strömende Kühlmedium, beispielsweise Glykol, abgeführt. Die vom Kühlmedium aufgenommene Wärme geht dann über einen Luftkühler in die Umgebung.

Nachteilig bei diesem System ist, daß die Temperatur der kühlenden Arbeitsfläche über deren Erstreckung sehr unterschiedlich ist, da die Temperatur des Kühlmediums durch die Wärmezufuhr aus den Batterien steigt. Andererseits haben die Batterien einen optimalen Arbeitstemperaturbereich. Eine zu hohe Arbeitstemperatur verringert die Lebensdauer, während eine zu niedrige Arbeitstemperatur zu einem niedrigen Wirkungsgrad führt. Daraus ergibt sich, daß durch den bekannten Wärmeaustauscher optimale Arbeitsbedingungen für die Batterien nicht gewährleistet werden können eben wegen der entlang der Arbeitsfläche unterschiedlichen Temperaturen.

Besonders kraß werden diese Verhältnisse, wenn beim erneuten Starten des Fahrzeugs im Winter das Kühlmedium mit einer niedrigeren Temperatur direkt in den Wärmeaustauscher einfließt. Dies hat zur Folge, daß die im Bereich des Zuflusses des Kühlmittels angeordneten Batterien einen Temperaturschock erleiden, so daß die Leistung dieser Batterien wesentlich kleiner ist als die Nennleistung. Dies führt zu einer deutlichen Verringerung des Beschleunigungsvermögens des Fahrzeuges.

Diese unangenehmen Erscheinungen gelten grundsätzlich auch für die oben genannten anderen Anwendungsgebiete, indem die mit der Arbeitsfläche in Berührung stehenden Gegenstände bzw. Medien über den Verlauf der Arbeitsfläche unterschiedlichen Temperaturen ausgesetzt sind.

Aufgabe der Erfindung ist es daher, einen Wärmeaustauscher der eingangs genannten Art dahingehend weiterzubilden, daß sich über den Verlauf der Arbeitswand des Wärmetauschers bzw. dessen Arbeitsfläche eine möglichst gleichmäßige Temperatur ergibt.

Diese Aufgabe ist ausgehend von einem Wärmeaustauscher der eingangs genannten Art erfindungsgemäß dadurch gelöst, daß der Kammer senkrecht zur Arbeitswand wenigstens eine weitere Kammer vorgeschaltet ist, daß die weitere Kammer die der Arbeitswand der ersten Kammer gegenüberliegende wärmeleitende Wand mit der ersten Kammer gemeinsam hat, daß die weitere Kammer den Einlaß für das Kühl- bzw. Heizmittel aufweist, und daß das Kühl- bzw. Heizmittel von der weiteren Kammer in die erste Kammer zumindest indirekt übergeleitet wird.

Diese Maßnahmen haben die Wirkung, daß die Temperaturdifferenz zwischen Eintritt des Kühl- bzw. Heizmittels in die erste Wärmeaustauschkammer und dem Austritt des Mittels aus dieser Kammer wesentlich herabgesetzt ist, bei einer vorgeschalteten weiteren Kammer um ca. 50 %, womit auch die Temperaturdifferenz zwischen den beiden in Strömungsrichtung des Mittels gesehenen Enden der Arbeitsfläche entsprechend verringert ist. Damit ist gleichzeitig bezüglich der Temperatur der Arbeitswand auch eine Unempfindlichkeit gegen Temperaturschwankungen des Kühl- bzw. Heizmittels am Einlaß erreicht.

Schaltet man mehrere Wärmeaustauschkammern der ersten Wärmeaustauschkammer vor, so nimmt die genannte Temperaturdifferenz an der Arbeitsfläche entsprechend weiter ab, so daß man im Ergebnis an der Arbeitsfläche eine sehr geringe Temperaturdifferenz erhalten kann, wodurch die eingangs genannten negativen Erscheinungen (Temperaturschock etc.) vermieden sind.

Theoretisch ist es so, daß man durch unendlich viele vorgeschaltete Wärmeaustauschkammern eine konstante Temperatur über den gesamten Bereich der Arbeitsfläche erreichen kann. In der Praxis ist aber für die Gegenstände bzw. das Medium, welche gekühlt bzw. erwärmt werden sollen, ein gewisser Temperaturbereich unschädlich bzw. erlaubt.

Zweckmäßig kann es sein, daß die gemeinsame Wand von erster und dieser benachbarter Kammer mit über ihrer Fläche insbesondere gleichmäßig verteilten Öffnungen zum Übertritt des Kühl- bzw. Heizmittels von der benachbarten Kammer in die erste Kammer versehen ist. Hiermit ergibt sich eine sehr gleichmäßige Temperatur der Arbeitsfläche, da diese auf ihrer Rückseite an allen Stellen von Kühl- bzw. Heizmittel über die Öffnungen angeströmt wird.

Aus konstruktiven Gründen kann es vorteilhaft sein, daß die Kammern in mehrere zur Strömungsrichtung des Kühl- bzw. Heizmittels parallele Strömungskanäle unterteilt sind. Hier eröffnet sich einmal eine große Variationsvielfalt bezüglich des mit der Erfindung grundsätzlich vorgesehenen Strömungsverlaufes. Zum anderen läßt sich jedoch auch so leichter die Anpassung an bestimmte räumliche Gegebenheiten vornehmen.

Zweckmäßigerweise kann vorgesehen sein, daß das Kühl- bzw. Heizmittel die Kammern nacheinander mäanderförmig durchströmt, was heißt, daß das Überströmen des Mittels bei nacheinander geschalteten Kammern abwechselnd mal auf der einen Seite und mal auf der anderen Seite der Gesamtanordnung erfolgt.

Der Gegenstand der Erfindung ermöglicht leicht auch eine Verdopplung der Arbeitsflächen. Hierzu kann vorgesehen sein, daß bei zahlreichen senkrecht zur Arbeitswand hintereinander geschalteten Kammern bzw. Strömungskanälen die von der ersten Kammer am weitesten entfernte Kammer bzw. die von den ersten Strömungskanälen am weitesten entfernten Strömungskanäle ebenfalls mit ihrer Außenwand eine mit den Gegenständen bzw. einem gasförmigen oder flüssigen Medium in Verbindung stehende Arbeitsfläche bildet, daß das Kühl- bzw. Heizmittel der Kammeranordnung im Bereich zwischen den beiden Außenkammern, insbesondere in der Mitte zwischen diesen Außenkammern zuströmt, und daß das Kühl- bzw. Heizmittel ausgehend von der den Zustrom enthaltenden Kammer in Richtung auf beide Außenkammern aufgeteilt wird.

Normalerweise wird man, wie gesagt, den Zustrom des Kühl- bzw. Heizmittels in der Mitte zwischen den beiden äußeren Wärmaustauschkammern anordnen, so daß sich für beide Arbeitsflächen die gleiche Temperatur ergibt. Es besteht hier jedoch auch die Möglichkeit, den beiden Arbeitsflächen unterschiedliche Temperaturen zur Behandlung unterschiedlicher Güter bzw. Medien zu geben, was durch entsprechende außermittige Anordnung des Zuflusses des Kühl- bzw. Heizmittels erreicht werden kann. Ausgehend von der mittigen Anordnung kann dieses Ziel im übrigen auch, worauf später noch eingegangen wird, durch unterschiedliche Profilierung der einzelnen Zwischenwände zwischen den Kammern erreicht werden.

Eine andere Möglichkeit besteht darin, daß die Arbeitsflächen zweier senkrecht zu diesen nebeneinander angeordneter erster Kammern aufeinander zu gerichtet sind, und daß zwischen den Arbeitsflächen ein Strömungsraum zum Kühlen oder Erwärmen eines gasförmigen oder flüssigen Mediums gebildet ist.

Eine besondere Ausbildung kann dadurch gegeben sein, daß bei zahlreichen nebeneinander angeordneten Kammern die von der Arbeitswand am weitesten entfernte Wand sowohl den Einlaß als auch den Auslaß für das Kühl- bzw. Heizmittel aufweist, daß die zwischenliegenden Wände mit Durchtrittsöffnungen für den Zustrom und den Rückstrom des Mittels versehen sind, und daß miteinander fluchtende Öffnung benachbarter Wände derart gegenüber dem benachbarten Kammern abgedichtet bzw. dichtungslos sind, daß der Mittelzustrom parallel über jede zweite Kammer einschließlich der der ersten Kammer benachbarten Kammer erfolgt, während der Mittelrückstrom parallel über die übrigen Kammern erfolgt.

Auf diese Weise findet für das der ersten Kammer zuströmende Mittel in der ersten Kammer eine Umlenkung auf den Rückfluß statt, wobei die Kammeranordnung im übrigen nach Art eines Gegenstromkühlers bzw. Gegenstrom- Heizelementes arbeitet.

Zur konstruktiven Verwirklichung des Gegenstandes der Erfindung hat es sich als zweckmäßig erwiesen, daß die Wände durch Wärmeaustauschplatten gebildet sind. Hierbei kann vorgesehen sein, daß benachbarte Platten über ihren Umfang dicht miteinander verbunden sind, um einzelne gegenüber der Umgebung dichte Kammern zu bilden, was zum Beispiel durch Formschluß, umlaufende Dichtungen, Schweißen, Löten oder Kleben geschehen kann.

Haben die einzelnen Kammerwände nur eine verhältnismäßig geringe Größe und mechanische Beanspruchung, so können diese grundsätzlich als glatte Flächen ausgebildet werden. Bei größerer Ausdehnung und damit höherer Beanspruchung der Kammerwände ist es jedoch zweckmäßig, daß die Wärmeaustauschflächen benachbarter Platten gegeneinander abgestützt sind.

Diese Abstützung kann im einen Falle über Gitter, insbesondere aus Draht gegeben sein, wodurch die Turbulenz in den Kammern erhöht und damit der Wärmeübergang verbessert wird.

Es kann jedoch auch vorgesehen sein, daß die Platten über eine an ihnen angebrachte Profilierung gegeneinander abgestützt sind. Diese Profilierung kann an den Platten durch Prägen, Schweißen, Kleben, Löten, Gießen, Beschichten oder durch spanendes funkenerosives, lichtbogenerosives, chemisches oder elektrochemisches Abtragen erzeugt werden. Durch die Profilierung läßt sich jedoch auch das Strömungsverhalten in den einzelnen Kammern insbesondere mit dem Ziel eines guten Wärmeübergangs beeinflussen oder aber auch dahingehend, daß bei der weiter oben beschriebenen Anordnung mit zwei Arbeitsflächen entweder der Mittelzustrom außermittig der Kammeranordnung angebracht werden kann, was aus räumlichen Gründen oft wünschenswert ist, oder daß ausgehend von einem beispielsweise mittigen Zufluß den beiden Arbeitsflächen unterschiedliche Temperaturen gegeben werden können.

Die vorstehende Bauform schließt auch eine Profilierung der Außenwand des oder der ersten Kammern ein, wobei diese Profilierung sich möglichst in Strömungsrichtung des Mittels erstrecken sollte. Eine solche Profilierung der Außenwand der ersten Kammer ist jedoch insbesondere für die Temperaturbeeinflussung von Gegenständen vielfach unerwünscht, so daß es gerade in diesem Falle vorteilhaft ist, daß die die Außenwand bildende Platte ohne Profilierung ausgebildet oder nur auf der den Gegenständen abgewandten Seite profiliert ist.

Die Kammerwände können eben ausgebildet sein. Je nach Anwendungsfall und räumlichen Verhältnissen kann es jedoch auch zweckmäßig sein, daß die Wände bezüglich der Gegenstände bzw. des Mediums konkav oder konvex ausgebildet sind.

Soweit bisher geschildert, sind die Kammern durch einen Spalt bzw. Plattenspalt gebildet. Im Rahmen der Erfindung liegt es jedoch auch selbstverständlich, daß die einzelnen Kammern aus mehreren parallel geschalteten Spalten bzw. Plattenspalten bestehen.

Weitere erfindungswesentliche Merkmale und Einzelheiten ergeben sich aus der nachfolgenden Beschreibung von Ausführungsformen, die auf der Zeichnung dargestellt sind. In der Zeichnung zeigen:
- Figur 1: eine Kühlanordnung für Batterien der bekannten Art in vereinfachter, perspektivischer Ansicht;
- Figur 2: einen Schnitt durch den Wärmeaustauscher gemäß Figur 1 mit graphischem Temperaturverlauf;
- Figur 3: eine erste Bauform nach der Erfindung mit graphischem Temperaturverlauf in der Darstellungsweise gemäß Figur 2;
- Figur 4 bis 6: weitere Ausführungsformen nach der Erfindung, teilweise mit graphischem Temperaturverlauf in der Darstellungsweise gemäß Figur 2;
- Figur 7: eine Prinzipdarstellung des erfindungsgemäßen Wärmeaustauschers in Plattenbauform;
- Figur 8 bis 10: verschiedene Randabdichtungen der Wärmeaustauschkammern bei der Bauform gemäß Figur 7;
- Figur 11 bis 16: die Bauformen gemäß Figuren 7 bis 10 mit unterschiedlicher Anordnung von Einlaß und Auslaß des Kühlmittels bzw. Heizmittels;
- Figur 17 und 18: unterschiedliche Formen der gegenseitigen Abstützung der den Wärmeaustauscher bildenden Platten;
- Figur 19 und 20: Abwandlungen der Plattenform gegenüber den Ausführungsformen gemäß Figur 7 bis 18;
- Figur 21: eine Plattenbaufom mit abgewandeltem Strömungsverlauf des Kühl- bzw. Heizmittels;
- Figur 22: die Bauform gemäß Figur 3 mit abgewandeltem Überströmweg zwischen zwei benachbarten Kammern;
- Figur 23: eine besondere Ausbildung der Bauform gemäß Figur 22;
- Figur 24: eine Umkehrvariante der Bauform gemäß Figur 6;
- Figur 25 und 26: eine abgewandelte Ausbildung der Wärmeaustauschkammern.

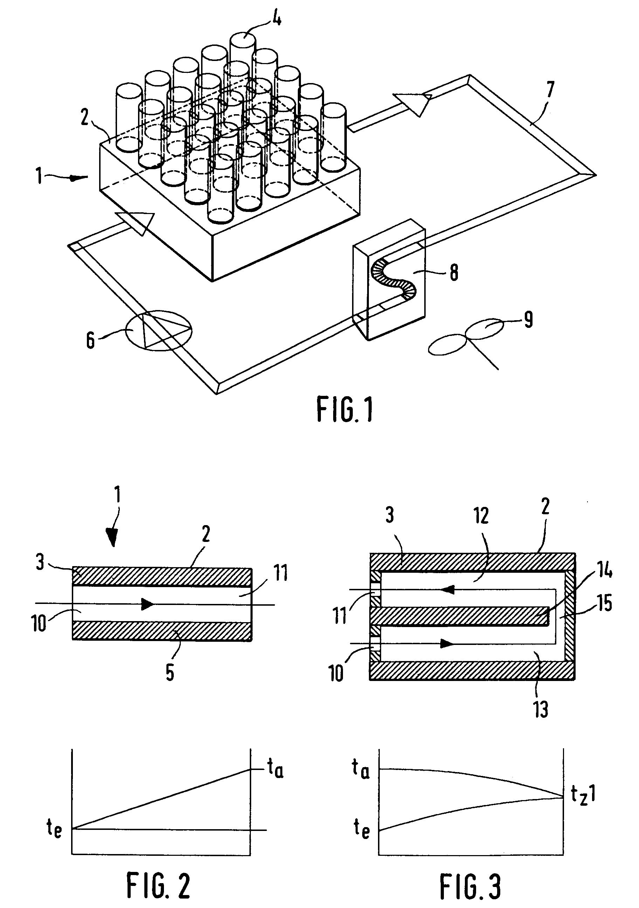

Figur 1 zeigt einen gemäß Figur 2 ausgebildeten Wärmeaustauscher 1, auf dessen Arbeitsfläche 2 der Arbeitswand 3 dicht gepackt Batteriezellen 4 angeordnet sind.

Nach einem praktischen Beispiel können dies 200 Batteriezellen sein, die unter Vacuum stehen.

Der Wärmeaustauscher 1 ist auf der der Wand 3 gegenüberliegenden Seite von einer Wand 5 begrenzt.

Die so gebildete Wärmeaustauschkammer wird durch von einer Pumpe 6 umgetriebenes Kühlmittel 7 durchströmt, das die bei der Arbeit der Batteriezellen 4 entstehende Wärme abführt. Das Kühlmittel wird in einem Luftkühler 8 beispielsweise mittels eines Gebläses 9 rückgekühlt.

Wie die Graphik gemäß Figur 2 zeigt, ergibt sich für die Arbeitsfläche 2 zwischen Einlaß 10 und Auslaß 11 des Wärmeaustauschers ein Temperaturverlauf mit von tₑ bis tₐ steigendem Verlauf.

Aus der Elektrochemie ist bekannt, daß die dargestellte Batterie bei ca. 300° Celsius optimal arbeitet. Bei dem dargestellten bekannten Kühler erhält man jedoch ein Temperaturunterschied zwischen Einlaß 10 und Auslaß 11 von ca. 70° Celsius, also beispielsweise etwa einen Bereich von 330° Celsius bis 260° Celsius. Bekanntermaßen bedeutet jedoch eine zu hohe Arbeitstemperatur eine Verkürzung der Lebensdauer der Batteriezellen, während eine zu niedrige Arbeitstemperatur zu einem niedrigeren Wirkungsgrad führt.

Ist andererseits im Winter die Außentemperatur sehr niedrig, so kann bei vorhergehendem Stillstand des Motors zunächst im Bereich des Einlasses 10 für die Batteriezellen ein Temperaturschock entstehen, der den Wirkungsgrad und die Leistung der Batterien stark verringert.

Um dem zu begegnen, zeigt Figur 3 eine erste prinzipielle Lösung. Hier ist senkrecht zur Arbeitsfläche 2 der Wärmeaustauschkammer 12 des ersten Wärmeaustauschers eine weitere Wärmeaustauschkammer 13 vorgeschaltet. Diese weitere Wärmeaustauschkammer 13 weist nunmehr den Einlaß 10 für das Kühlmittel auf, während der Auslaß 11 für das Kühlmittel bei der Wärmeaustauschkammer 12 des ersten Wärmeaustauschers verbleibt.

Die beiden Wärmeaustauschkammern sind durch eine gemeinsame wärmeleitende Zwischenwand 14 getrennt, die über eine Öffnung 15 das Überströmen des Kühlmittels von der weiteren Wärmeaustauschkammer 13 auf die erste Wärmeaustauschkammer 12 erlaubt.

Bei dieser Bauform ergibt sich der in der Graphik gemäß Figur 3 dargestellte Temperaturverlauf zwischen den bereits aus Figur 2 ersichtlichen Temperaturen tₑ und tₐ,wobei vermöge der Zwischenwand 14 etwa eine hälftige Aufteilung des Temperaturanstieges zwischen diesen beiden Werten erfolgt, so daß das Kühlmittel die erste Wärmeaustauschkammer 12 über die Öffnung 15 mit einer Temperatur t_{z}1 erreicht, die etwa einen Mittelwert zwischen tₑ und tₐ einnimmt. Dadurch tritt bereits eine erhebliche Vergleichmäßigung des Temperaturverlaufs entlang der Arbeitsfläche 2 (von rechts nach links in Figur 3) ein und der Temperaturunterschied liegt gegenüber dem Beispiel gemäß Figur 1 und 2 bereits unter 40° Celsius.

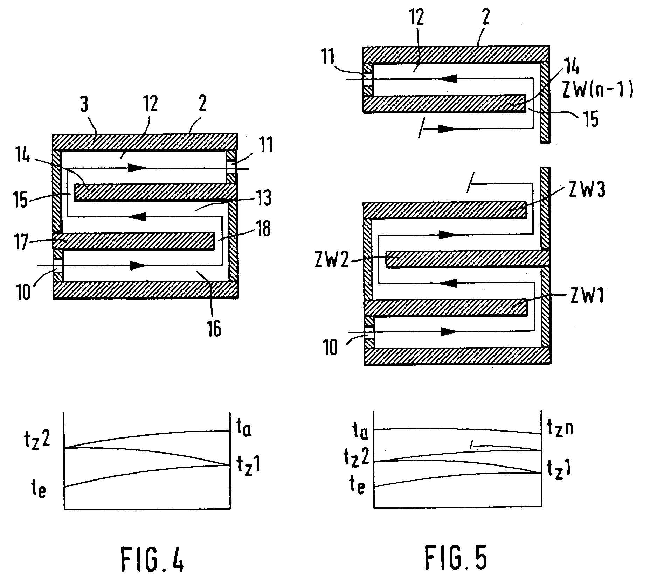

Figur 4 zeigt eine Vermehrung auf drei Wärmeaustauschkammern, wobei die von der Arbeitsfläche 2 am weitesten entfernte Wärmeaustauschkammer 16 den Einlaß 10 für das Kühlmittel aufweist, während der Auslaß 11 wieder von der ersten Wärmeaustauschkammer 12 gebildet wird. Die zweite Wärmeaustauschkammer 13 ist wiederum von der dritten Wärmeaustauschkammer 16 durch eine wärmeleitende Zwischenwand 17 getrennt, wobei diese zwischen zweiter und dritter Wärmeaustauschkammer eine Überströmöffnung 18 läßt. Wie aus Figur 4 ersichtlich, sind die Überströmöffnungen 15, 18 so angeordnet, daß das Kühlmittel die Anordnung ausgehend von dem Einlaß 10 mäanderförmig durchströmt. Die zu Figur 4 gehörende Graphik zeigt, daß nunmehr das Gefälle zwischen tₑ und tₐ in drei Abschnitte aufgeteilt ist mit Zwischenwerten t_{z}1 und t_{z}2. Dadurch ergibt sich zwischen t_{z}2 und tₐ ein noch geringerer Temperaturanstieg und damit für die Arbeitsfläche 2 eine noch gleichmäßigere Temperaturverteilung.

Wie in Figur 5 angedeutet, kann man nun durch weitere Vergrößerung der Zahl hintereinander geschalteter Wärmeaustauschkammern die an der Arbeitsfläche 2 auftretende Temperaturdifferenz sehr klein machen, so daß sich bei n Wärmeaustauschkammern nur noch eine Temperaturdifferenz zwischen t_{z}n und tₐ ergibt, die fast schon einer über den gesamten Bereich der Arbeitsfläche 2 gleichbleibenden Temperatur entspricht. Die Zahl der Zwischenwände ZW erreicht dabei die Größe (n-1). Auch aus Figur 5 ist wiederum ersichtlich, daß die Öffnungen zwischen benachbarten Wärmeaustauschkammern so angeordnet sind, daß das Kühlmittel die Anordnung mäanderförmig durchströmt.

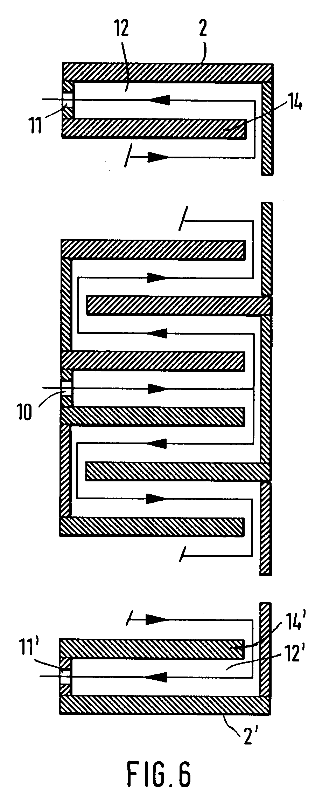

Figur 6 zeigt nun ein Beispiel, gemäß dem zwei Wärmeaustauscher gemäß Figur 5 umgekehrt gegeneinander gekoppelt sind, so daß sie die den Zufluß 10 aufweisende Wärmeaustauschkammer gemeinsam haben und an beiden Enden je eine Arbeitsfläche 2, 2' als Begrenzung einer Wärmeaustauschkammer 12, 12' bilden. Von der den Zufluß 10 aufweisenden Wärmeaustauschkammer verteilt sich der Kühlmittelstrom in beide Richtungen bezogen auf Figur 6 sowohl nach oben als auch nach unten. Beim dargestellten Beispiel werden die Arbeitsflächen 2, 2' über ihren Verlauf die gleiche Temperaturdifferenz aufweisen. Legt man jedoch den Zufluß 10 nicht in die Mitte zwischen den Arbeitsflächen 2, 2' so läßt sich erreichen, daß die Temperaturdifferenz der beiden Arbeitsflächen unterschiedlich ist.

In den Figuren 2 bis 6 sind die Wärmeaustauscher mehr prinzipiell dargestellt. Für die praktische Ausführung erscheint der Aufbau dieser Wärmetauscher aus einer Stapelung von Wärmeaustauschplatten zweckmäßig.

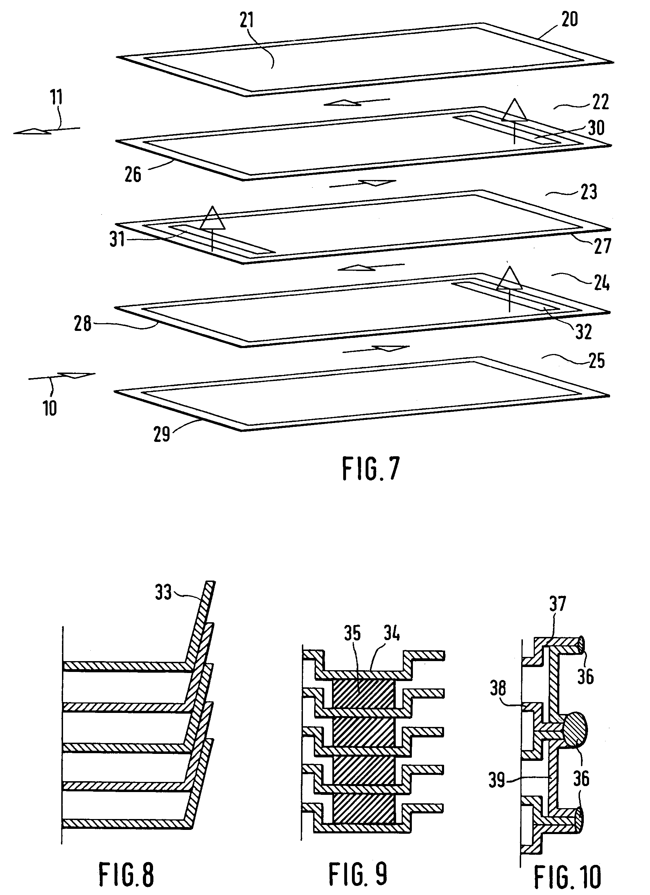

Ein Beispiel hierfür zeigt Figur 7 in Explosionsdarstellung. Hier sind wieder Zufluß 10 und Abfluß 11 für das Kühlmittel ersichtlich und es bildet die obere Wärmeaustauschplatte 20 eine Wärmeaustauschfläche bzw. Arbeitsfläche 21, die eine erste Wärmeaustauschkammer 22 abschließt. Senkrecht zur Wärmeaustauschplatte 20 schließen sich an die Kammer 22 weitere Kammern 23, 24 und 25 an, die jeweils durch Zwischenwände bildende Platten 26, 27 und 28 voneinander getrennt sind. Die Platte 29 schließt die Anordnung und damit die Kammer 25 nach unten ab.

Wie aus Figur 7 ersichtlich, sind in den Platten 26 bis 28 Überströmöffnungen 30, 31 und 32 gebildet, die als sich quer zur Strömung des Kühlmittels praktisch über die gesamten Plattenbreite erstreckende Schlitze ausgebildet sind. Auch hier ist durch jeweils um 180 Grad in der Plattenebene erfolgte Drehung benachbarter Platten, die untereinander gleich sein können, wieder ein mäanderförmiger Fluß für das Kühlmittel gegeben.

Um den so die Kammern bildenden Plattenstapel bezüglich benachbarter Platten am Umfang abzudichten, kann beispielsweise von den Möglichkeiten gemäß Figur 8 bis 10 Gebrauch gemacht werden.

Figur 8 zeigt, daß die Platten randseits umlaufend eine Aufbördelung 33 aufweisen, so daß benachbarte Platten formschlüssig gegebenenfalls unter Zwischenlage einer Dichtschicht ineinander gesteckt werden können und so über den Umfang abgedichtete Wärmeaustauschkammern bilden.

Figur 9 zeigt, daß die Platten entlang ihres Randes eine eingeprägte Nut aufweisen. Zwischen benachbarten Platten ist in die Nut eine Dichtung 35 eingesetzt, gegen die der Boden der nächstfolgenden Platte in Anlage kommt.

Zum Beispiel Figur 8 kann noch gesagt werden, daß hier die benachbarten Platten mit ihren Aufbördelungen 33 auch miteinander verklebt sein können. Entsprechend können auch die Dichtungen 35 mit den jeweils benachbarten Platten verklebt sein.

Figur 10 zeigt, daß benachbarte Platten entlang ihres Umfangsrandes durch eine Schweißung oder Lötung 36 miteinander verbunden sein können. Beim dargestellten Beispiel sind die Platten wieder ähnlich wie in Figur 9 ausgebildet, wobei jedoch jede zweite Platte gegenüber der vorhergehenden um 180° um ihre Längsachse gedreht ist. Um auf diese Weise gleichmäßig beabstandete Wärmeaustauschkammern zu erhalten, sind zwischen einer Platte 37 und der nächstfolgenden, gedrehten Platte 38 U-förmige Profile 39 eingesetzt und zusammen mit den Platten verschweißt.

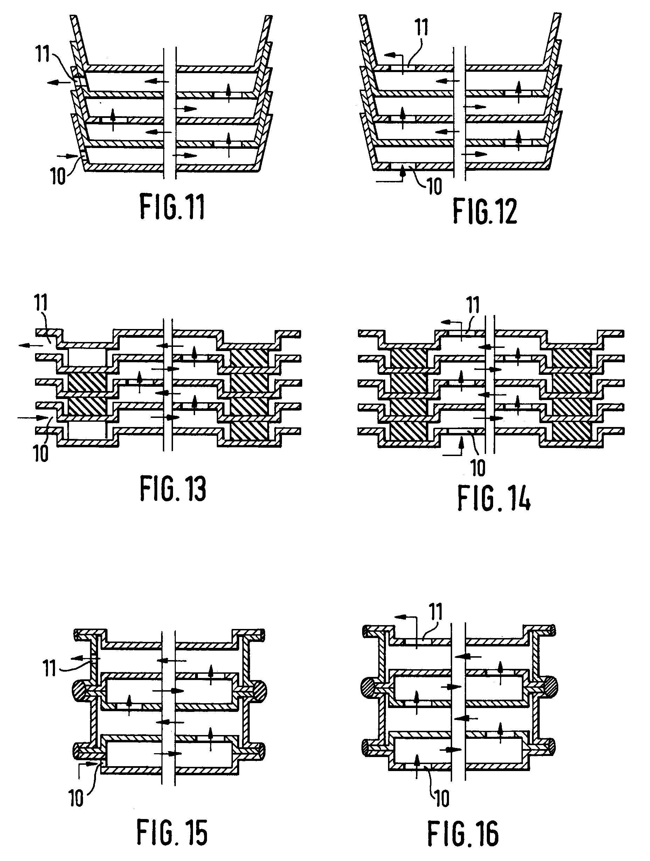

Die Figuren 11 bis 16 zeigen die Beispiele gemäß Figur 8 bis 10 etwas vollständiger. Hieraus ist ersichtlich, daß bei den Beispielen gemäß Figur 11, 13 und 15 die Zutrittsöffnung 10 und die Auslaßöffnung 11 für das Kühlmittel seitlich des Plattenstapels angeordnet ist, während bei den Beispielen gemäß Figur 12, 14, und 16 die Einlaßöffnung 10 und die Auslaßöffnung 11 für das Kühlmittel in den die Kammern bildenden Wänden angeordnet sind, von wo aus sich zumindest an die Auslaßöffnung 11 ein Ableitungsrohr oder dergleichen anschließt.

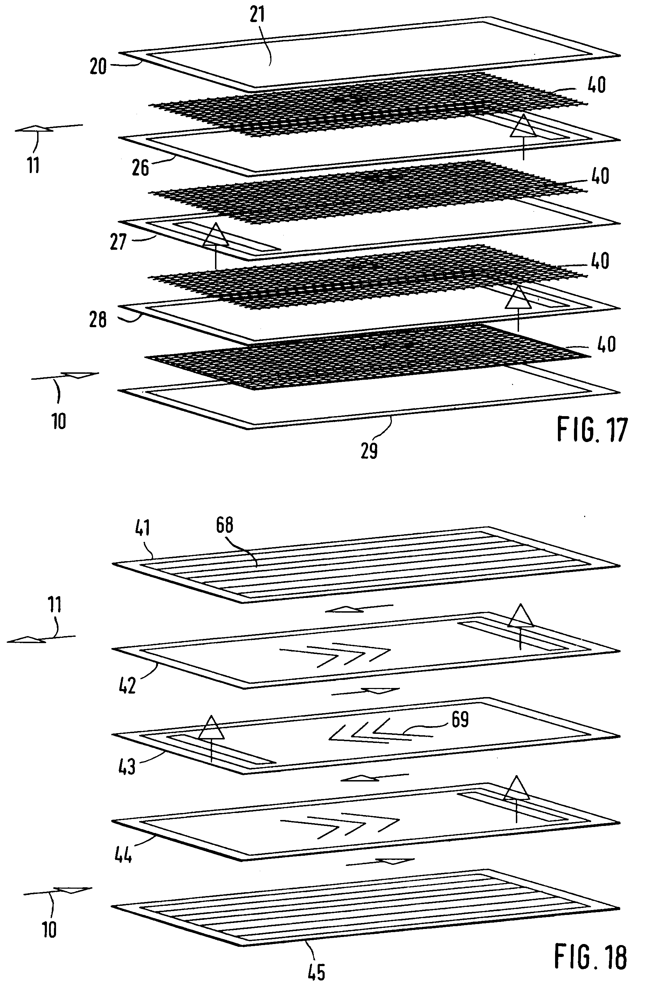

Weisen die durch die einzelnen Platten gebildeten Kammerwände nur eine relativ kleine Oberfläche auf, so kann der Plattenstapel wie aus Figur 11 bis 16 ersichtlich zusammengesetzt werden. Ergeben sich jedoch großflächigere Kammerwände, so ist es erforderlich, benachbarte Kammerwände gegeneinander abzustützen, um Durchbiegungen zu vermeiden. Diese Abstützung kann, wie aus Figur 17 ersichtlich, durch innerhalb des Außenrandes der Platten zwischengelegte Gitter 40 gebildet sein, die zusätzlich die Turbulenz des Kühlmittels innerhalb der Wärmeaustauschkanäle erhöhen und damit für eine gute Wärmeübertragung zwischen benachbarten Platten sorgen.

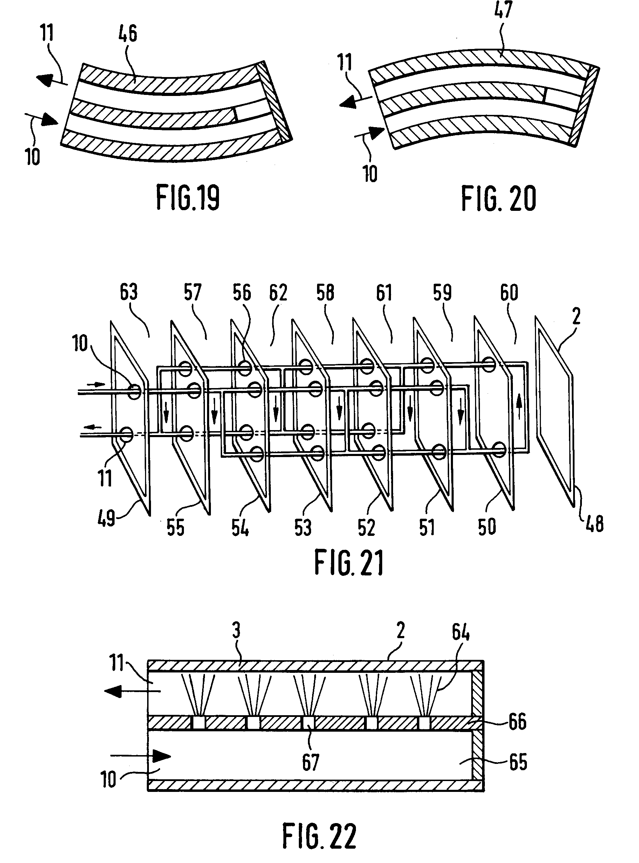

Wie aus Figur 18 ersichtlich, besteht jedoch auch die Möglichkeit, den Platten 41 bis 45 eine Profilierung 68, 69 derart zu geben, daß die aufeinander zu gerichteten Profilteile benachbarter Platten aufeinander zu liegen kommen, in der Regel an den Kreuzungstellen benachbarter Profile punktförmig, so daß sich dadurch eine kammerbildende Beabstandung benachbarter Platten ergibt und gleichzeitig ebenfalls wieder eine gute Durchwirbelung des Kühlmittels und damit ein guter Wärmeübergang. Figur 18 zeigt, daß die die Arbeitsfläche bildende Platte 41 und die den gegenüberliegenden Abschluß der Anordnung bildende Platte 45 eine in Strömungsrichtung des Kühlmittels ausgerichtete Profilierung 68 aufweist, um Zu- und Abfluß des Kühlmittels zu unterstützen. Die dazwischenliegenden Platten 42 bis 44 weisen zum Beispiel eine fischgrätförmige Profilierung 69 auf.

Die Profilierungen können aus den Platten, wenn die Platten aus Blechtafeln ausgeschnitten sind, durch Prägen hergestellt werden. Die Profilierung kann jedoch auch durch Materialaufschweißen, Aufkleben von Material, Auflöten von Material, beim Herstellen gegossener Platten durch das Gießen, mittels Beschichtung oder durch spanendes, funkenerosives, lichtbogenerosives, chemisches oder elektrochemisches Abtragen erzeugt werden.

Beim Beispiel gemäß Figur 18 ist die Arbeitsfläche der Platte 41 durch die dort dargestellte, geprägte Profilierung ebenfalls profiliert. Eine solche Ausführung eignet sich allerdings nur für die Zusammenarbeit mit gasförmigen oder flüssigen Medien. Sollen Gegenstände, beispielsweise die erwähnten Batterien mit der Arbeitsfläche in Berührung stehen, muß die Platte 41 selbstverständlich auf der Arbeitseite glattflächig ausgebildet sein.

Bei allen bisherigen Beispielen sind die Kammerwände bzw. die Platten eben. Gerade in Zusammenwirken mit gasförmigen oder flüssigen Medien besteht jedoch auch die Möglichkeit, die Arbeitsflächen 46 bzw. 47 gegenüber dem gasförmigen oder flüssigen Medium konkav, wie dies Figur 19 zeigt, oder konvex, wie dies Figur 20 zeigt, auszubilden. Eine solche Ausbildung kann sich je nach Bauform des Wärmeaustauschers oder auch aus Platzgründen zweckmäßig erweisen. So kann insbesondere der in den Figuren 19 und 20 gezeigte Ausschnitt Teil eines Kreisquerschnittes sein, der einen Behälter oder ein Durchflußrohr bildet, in dem das gasförmige oder flüssige Medium gekühlt oder erwärmt wird.

Figur 21 zeigt das Beispiel eines Plattenwärmeaustauschers, bei dem sowohl der Kühl- bzw. Heizmittelzufluß 10 als auch der Abfluß 11 in der Fläche der der die Arbeitsfläche 2 bildenden Platte 48 gegenüberliegenden Bodenplatte 49 angeordnet sind. Die die Zwischenwände zwischen den Wärmeaustauschkammern bildenden Platten 50 bis 55 weisen gegenüber der jeweiligen benachbarten Platte abgedichtete bzw. dichtungslose Bohrungen 56 auf derart, daß der Kühlmittelzufluß jeweils nur jede zweite Wärmeaustauschkammer 57 bis 59 einschließlich der der ersten Wärmeaustauschkammer 60 benachbarten Wärmeaustauschkammer 59 erreicht und zwar parallel zueinander, während der Kühlmittelrückfluß ebenfalls parallel zueinander die übrigen Kammern 61, 62 und 63 durchströmt. Wie ersichtlich, findet dabei die Umkehr zwischen Kühlmittelzufluß und Kühlmittelrückfluß in der ersten Wärmeaustauschkammer 60 statt.

Figur 22 zeigt eine Abwandlung bezüglich der Überströmöffnungen zumindest zwischen der ersten Wärmeaustauschkammer 64 und der dieser vorgeschalteten Kammer 65. Hier sind in der diesen Kammern gemeinsamen Zwischenwand 66 vorzugsweise gleichmäßig über deren Flächenbereich angeordnete Bohrungen 67 angebracht, über die das der Kammer 65 zuströmende Kühlmittel an zahlreichen Stellen in die Kammer 64 strömt und dabei gegen die Rückseite der die Arbeitsfläche 2 bildenden Wand gelangt. Hierdurch ist es auf einfache Weise möglich, die die Arbeitsfläche 2 aufweisende Wand auf der Rückseite an allen Stellen gleichmäßig mit einer bestimmten Kühltemperatur zu beaufschlagen, so daß sich über die gesamte Erstreckung der Arbeitsfläche 2 auch eine gleiche Kühlwirkung ergibt.

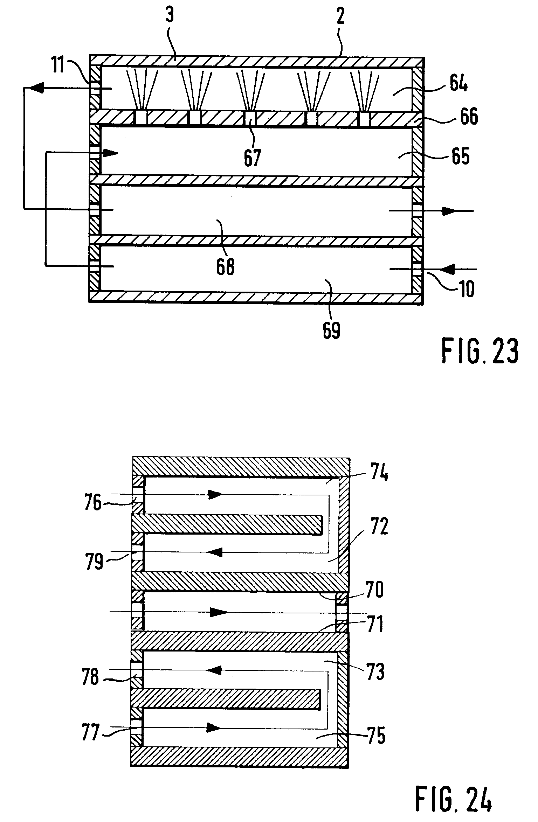

Figur 23 zeigt eine ergänzte Bauform des Gegenstandes gemäß Figur 22. Danach ist von zwei der Kammer 65 vorgeschalteten Kammern 68, 69 das die Kammer 64 verlassende Kühlmittel über die Kammer 68 im Gegenstrom zu dem über die Kammer 69 in die Kammer 65 geführte Kühlmittel geleitet, um dem zuströmenden Kühlmittel eine Vorwärmung zu erteilen.

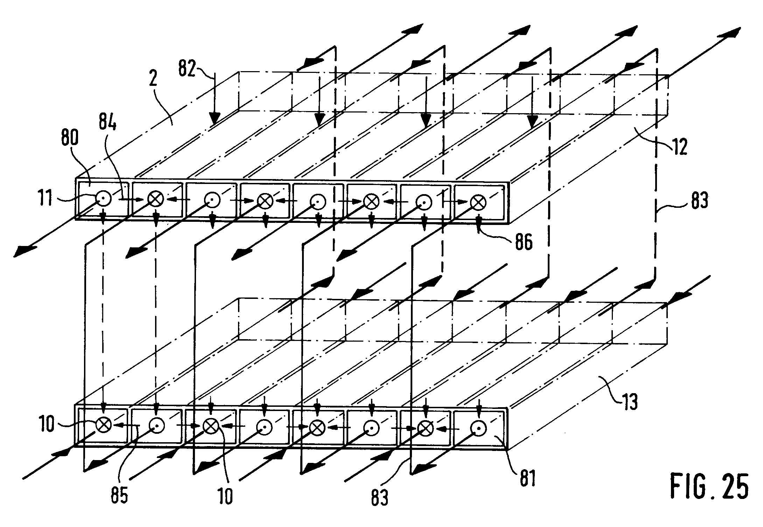

Figur 24 zeigt in Umkehrung der Verhältnisse gemäß Figur 6, wie die Arbeitsflächen 70, 71 zweier senkrecht zu diesen nebeneinander angeordneter erster Kammern 72, 73 aufeinander zu gerichtet sind. Den Kammern 72, 73 sind Kammern 74, 75 vorgeschaltet, denen das Heiz- oder Kühlmittel über Öffnungen 76, 77 zuströmt, worauf es dann die Kammern 72, 73 über Öffnungen 78, 79 wieder verläßt.

Zwischen den Arbeitsflächen 70, 71 ist eine Kammer gebildet, die von einem gasförmigen oder flüssigen Medium durchströmt werden kann, um dieses zu heizen oder zu kühlen.

Figur 25 zeigt in Anlehnung an das Beispiel gemäß Figur 3, wie eine erste Kammer 12 und eine dieser vorgeschaltete zweite Kammer 13 in mehrere zur Strömungsrichtung des Kühlmittels parallele Strömungskanäle 80, 81 hier im wesentlichen gleichen Strömungsquerschnittes unterteilt sind. Dabei bildet die Arbeitswand der Kammer 12 wieder eine Arbeitsfläche 2, in die die durch die zueinander parallelen Pfeile 82 symbolisierte Wärme von Batterien eindringt.

Das Kühlmittel tritt in die Strömungskanäle 81 über Öffnungen 10 ein und verläßt die Kanäle 80 über Öffnungen 11, wobei das einen Kanal 81 durchströmende Kühlmittel über eine Umlenkung 83 zu einem benachbarten Kanal 80 geleitet wird. Wie aus der Zeichnung ersichtlich, sind jeweils benachbarte Kanäle 80 bzw. 81 im Gegenstrom geschaltet, so daß zwischen benachbarten Kanälen 80 bzw. 81 untereinander sowie benachbarten Kanälen 80 und 81 miteinander ein Wärmeübergang entsprechend den Pfeilen 84 bzw. 85 sowie den Pfeilen 86 stattfindet. Die Gestaltung gemäß Figur 25 erlaubt in konstruktiver Hinsicht eine besonders stabile Ausbildung sowie gegebenenfalls eine bessere Anpassungsmöglichkeit an besondere räumliche Gegebenheiten.

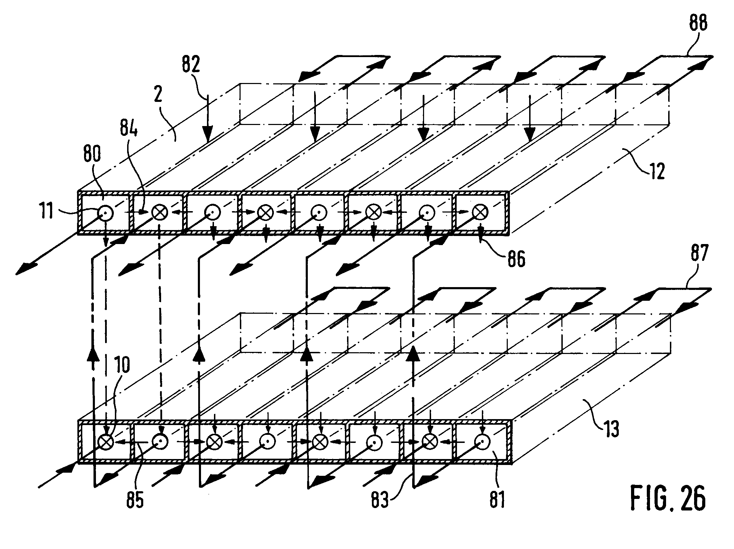

Die Ausführungsform gemäß Figur 26 entspricht weitestgehend der gemäß Figur 25 mit dem Unterschied, daß das Kühlmittel zunächst zwischen benachbarten Kanälen 81 über Umlenkungen 87 hin- und hergeführt wird, während es dann entsprechend zwischen benachbarten Kanälen 80 über Umlenkungen 88 im Gegenstrom hin- und hergeleitet wird.

## Patentansprüche

1. Wärmeaustauscher mit einer ersten Wärmeaustauschkammer zum Kühlen oder Erwärmen von Gegenständen bzw. eines gasförmigen oder flüssigen Mediums, wobei eine Arbeitswand der ersten Wärmeaustauschkammer mit ihrer Arbeitsfläche mit den Gegenständen bzw. dem Medium in Verbindung steht, und wobei die Kammer zwischen einem Einlaß und einem Auslaß von einem Kühlmittel bzw. Heizmittel durchströmt ist, das die Arbeitswand auf der der Arbeitsfläche abgewandten Seite bestreicht,
dadurch gekennzeichnet,
daß der Kammer (12, 22, 60, 64, 80) senkrecht zur Arbeitswand (3, 20, 41, 48) wenigstens eine weitere Wärmeaustauschkammer (13, 23, 59, 65, 81) vorgeschaltet ist, daß die weitere Kammer die der Arbeitswand der ersten Kammer gegenüberliegende wärmeleitende Wand (14, 26, 50, 66) mit der ersten Kammer gemeinsam hat, daß die weitere Kammer den Einlaß (10) für das Kühl- bzw. Heizmittel aufweist, und daß das Kühl- bzw. Heizmittel von der weiteren Kammer in die erste Kammer zumindest indirekt übergeleitet (15, 30, 67, 83) wird.

2. Wärmeaustauscher nach Anspruch 1,
dadurch gekennzeichnet,
daß die gemeinsame Wand (66) von erster (64) und dieser benachbarter Kammer (65) mit über ihre Fläche insbesondere gleichmäßig verteilten Öffnungen (67) zum Übertritt des Kühl- bzw. Heizmittels von der benachbarten Kammer in die erste Kammer versehen ist.

3. Wärmeaustauscher nach Anspruch 1,
dadurch gekennzeichnet,
daß die Kammern (12, 13) in mehrere zur Strömungsrichtung des Kühl- bzw. Heizmittels parallele Strömungskanäle (80, 81) unterteilt sind.

4. Wärmeaustauscher nach einem der Ansprüche 1 bis 3,
dadurch gekennzeichnet,
daß das Kühl- bzw. Heizmittel die Kammern (12, 13) bzw. Strömungskanäle (80, 81) nacheinander mäanderförmig durchströmt.

5. Wärmeaustauscher nach einem der Ansprüche 1 bis 4,
dadurch gekennzeichnet,
daß bei zahlreichen senkrecht zur Arbeitswand hintereinander geschalteten Kammern (12,13, 16; 22, 23, 24, 25; 57 bis 63) bzw. Strömungskanälen (80, 81) die von der ersten Kammer (12, 22, 60) am weitesten entfernte Kammer (12') bzw. die von den ersten Strömungskanälen am weitesten entfernten Strömungskanäle ebenfalls mit ihrer Außenwand eine mit Gegenständen bzw. einem gasförmigen oder flüssigen Medium in Verbindung stehende Arbeitsfläche (2') bildet, daß das Kühl- bzw. Heizmittel der Kammeranordnung im Bereich zwischen den beiden Außenkammern, insbesondere in der Mitte zwischen diesen Außenkammern zuströmt, und daß das Kühl- bzw. Heizmittel ausgehend von der den Zustrom enthaltenden Kammer in Richtung auf die beiden Außenkammern aufgeteilt wird.

6. Wärmeaustauscher nach einem der Ansprüche 1 bis 4,
dadurch gekennzeichnet,
daß die Arbeitsflächen (70, 71) zweier senkrecht zu diesen nebeneinander angeordneter erster Kammern (72, 73) aufeinander zu gerichtet sind, und daß zwischen den Arbeitsflächen ein Strömungsraum zum Kühlen oder Erwärmen eines gasförmigen oder flüssigen Mediums gebildet ist.

7. Wärmeaustauscher nach einem der Ansprüche 1 oder 2,
dadurch gekennzeichnet,
daß bei zahlreichen nebeneinander angeordneten Kammern (57 bis 63) die von der Arbeitswand (48) am weitesten entfernte Wand (49) sowohl den Einlaß (10) als auch den Auslaß (11) für das Kühl- bzw. Heizmittel aufweist, daß die zwischenliegenden Wände (50 bis 55) mit Durchtrittsöffnungen (56) für den Zustrom und den Rückstrom des Mittels versehen sind, und daß miteinander fluchtende Öffnungen benachbarter Wände derart gegenüber den benachbarten Kammern abgedichtet bzw. dichtungslos sind, daß der Mittelzustrom parallel über jede zweite Kammer (57, 58, 59) einschließlich der der ersten Kammer (60) benachbarten Kammer (59) erfolgt, während der Mittelrückstrom parallel über die übrigen Kammern (61, 62, 63) erfolgt.

8. Wärmeaustauscher nach einem der Ansprüche 1 bis 7,
dadurch gekennzeichnet,
daß die Wände durch wärmeleitende Platten (20, 26 bis 28, 41 bis 44, 48, 50 bis 55) gebildet sind.

9. Wärmeaustauscher nach Anspruch 8,
dadurch gekennzeichnet,
daß benachbarte Platten (20, 26 bis 29, 41 bis 45, 48, 49, 50 bis 55) über ihren Umfang dicht miteinander verbunden sind.

10. Wärmeaustauscher nach Anspruch 8 oder 9,
dadurch gekennzeichnet,
daß die benachbarten Platten (20, 26 bis 29, 41 bis 45) gegeneinander abgestützt sind.

11. Wärmeaustauscher nach Anspruch 10,
dadurch gekennzeichnet,
daß die Abstützung über Gitter (40), insbesondere aus Draht gegeben ist.

12. Wärmeaustauscher nach Anspruch 10,
dadurch gekennzeichnet,
daß die Platten über eine an ihnen angebrachte Profilierung (68, 69) gegeneinander abgestützt sind.

13. Wärmeaustauscher nach Anspruch 10,
dadurch gekennzeichnet,
daß die die Arbeitswand bildende Platte (20) ohne Profilierung ausgebildet oder nur auf der der Arbeitsfläche abgewandten Seite profiliert ist.

14. Wärmeaustauscher nach einem der Ansprüche 1 bis 13,
dadurch gekennzeichnet,
daß die Wände (3, 14, 17; ZW1 bis ZW (n - 1); 20, 26 bis 29; 41 bis 45) eben ausgebildet sind.

15. Wärmeaustauscher nach einem der Ansprüche 1 bis 13,
dadurch gekennzeichnet,
daß die Wände bezüglich der Gegenstände bzw. des Mediums konkav ausgebildet sind.

16. Wärmeaustauscher nach einem der Ansprüche 1 bis 13,
dadurch gekennzeichnet,
daß die Wände bezüglich der Gegenstände bzw. des Mediums konvex ausgebildet sind.
